(19)

Europäisches Patentamt

European Patent Office

Office européen des brevets

(11) **EP 3 358 710 A1**

(12) **EUROPEAN PATENT APPLICATION**

(43) Date of publication:
08.08.2018 Bulletin 2018/32

(51) Int Cl.:
*H02J 50/40* (2016.01)      *H02J 50/23* (2016.01)

(21) Application number: 17188536.1

(22) Date of filing: 30.08.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 03.02.2017 JP 2017018998

(71) Applicant: **KABUSHIKI KAISHA TOSHIBA**
**Minato-ku**
**Tokyo**
**105-8001 (JP)**

(72) Inventors:
• **HIGAKI, Makoto**
**Tokyo, 105-8001 (JP)**
• **MURATA, Kentaro**
**Tokyo, 105-8001 (JP)**

(74) Representative: **Moreland, David**
**Marks & Clerk LLP**
**Aurora**
**120 Bothwell Street**
**Glasgow G2 7JS (GB)**

(54) **WIRELESS POWER TRANSMISSION DEVICE AND WIRELESS POWER SUPPLY SYSTEM**

(57)      A wireless power transmission device according to one aspect of the present invention transmits electric power to a plurality of wireless power reception devices by using radio waves and includes: a plurality of antennas; a calculator arranged for calculating an amplitude and a phase at a time of transmission of a power transmission signal corresponding to each of the plurality of antennas; and a signal circuit arranged for transmitting the power transmission signals via the plurality of antennas, based on the amplitudes and the phases calculated by the calculator. The calculator calculates the amplitude and the phase at the time of the transmission of the power transmission signal, based on an amplitude and a phase at a time of reception by the wireless power reception devices of the power transmission signal and a power distribution ratio corresponding to the wireless power reception device.

FIG. 1

**Description**

<u>FIELD</u>

The present disclosure relates to a wireless power transmission device and a wireless power supply system.

<u>BACKGROUND</u>

A wireless electric power transmission device (hereinafter, "wireless power transmission device") arranged for wirelessly transmitting electric power is capable of transmitting the electric power to one specific wireless electric power reception device (hereinafter, "wireless power reception device"), by performing a beam forming process that uses an array antenna. However, there may be some situations in which electric power needs to be transmitted to a plurality of wireless power reception devices at the same time. In those situations, it may become necessary to appropriately distribute the electric power transmitted by the wireless power transmission device among the power reception devices, based on levels of priority or the like determined among the wireless power reception devices.

<u>SUMMARY</u>

According to the aspects of the present invention there is provided a device and a system for performing a wireless power transmission process according to a desired distribution ratio among a plurality of wireless power reception devices.
The device and the system according to the present invention are described in the claims.

<u>BRIEF DESCRIPTION OF THE DRAWINGS</u>

FIG. 1 is a block diagram illustrating an example of a schematic configuration of a wireless electric power supply system (hereinafter, "wireless power supply system") according to an arrangement of the present invention;
FIG. 2 is a block diagram illustrating an example of a schematic configuration of a wireless power transmission device according to an arrangement of the present invention;
FIG. 3 is a block diagram illustrating an example of a schematic configuration of any of wireless power reception devices according to an arrangement of the present invention;
FIG. 4 is a drawing illustrating an example of a schematic flowchart of an overall process performed by a wireless power supply system according to an arrangement of the present invention;
FIG. 5 is a first chart illustrating transitions in calculated values when a phase is adjusted by using a steepest gradient method;
FIG. 6 is a second chart illustrating transitions in calculated values when the phase is adjusted by using the steepest gradient method;
FIG. 7 is a third chart illustrating transitions in calculated values when the phase is adjusted by using the steepest gradient method;
FIG. 8 is a fourth chart illustrating transitions in calculated values when the phase is adjusted by using the steepest gradient method; and
FIG. 9 is a block diagram illustrating an example of a schematic configuration of a computer apparatus according to an arrangement of the present invention.

<u>DETAILED DESCRIPTION</u>

A wireless power transmission device according to one aspect of the present invention is a wireless power transmission device that transmits electric power to a plurality of wireless power reception devices by using radio waves, the wireless power transmission device including: a plurality of antennas; a calculator arranged for calculating an amplitude and a phase at a time of transmission of a power transmission signal corresponding to each of the plurality of antennas; and a signal circuit arranged for transmitting the power transmission signals via the plurality of antennas, based on the amplitudes and the phases calculated by the calculator. The calculator calculates the amplitude and the phase at the time of the transmission of the power transmission signal, based on an amplitude and a phase at a time of reception by the wireless power reception devices of the power transmission signal and a power distribution ratio corresponding to the wireless power reception device.
An arrangement will be explained in detail below with reference to the accompanying drawings. The present invention is not limited to the arrangement.

(An arrangement of the present invention)

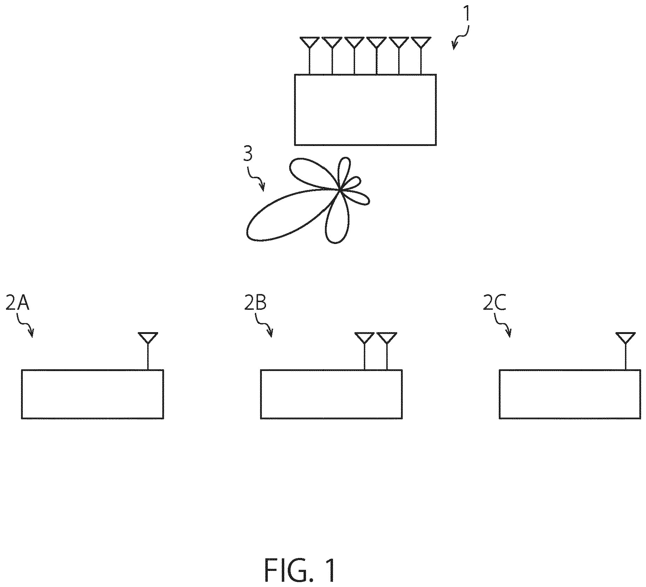

FIG. 1 is a block diagram illustrating an example of a schematic configuration of a wireless power supply system according to an arrangement of the present invention. The wireless power supply system includes a wireless power transmission device 1 that transmits electric power by using radio waves; and a plurality of wireless power reception devices 2 that each receives the electric power from the wireless power transmission device 1 by using the radio waves. FIG. 1 illustrates three power reception devices 2, which will be referred to as power reception devices 2A, 2B, and 2C. In this manner, the wireless power reception devices 2 are distinguished from one another by the letters affixed to the reference numerals. The wireless power supply system may include one wireless power transmission device 1 or two or more wireless power transmission devices 1.

For the sake of convenience, the wireless power transmission device 1 will hereinafter be referred to as "power transmission device 1", whereas the wireless power reception devices 2 will hereinafter be referred to as "power reception devices 2".

In the present wireless power supply system, it is assumed that a signal transmitted from the power transmission device 1 is received by the plurality of power reception devices 2. In other words, the power transmission device 1 sends the electric power to the plurality of power reception devices 2 at once. In that situation, the power transmission device 1 forms a beam (performs a beam forming process) in such a manner that levels of the electric power obtained by the power reception devices 2 are in a predetermined distribution ratio. For example, when it is assumed that the power distribution ratio among the power reception devices 2A, 2B, and 2C is 7:2:1, the power transmission device 1 is configured, in order to realize the distribution ratio, to form a beam 3 ensuring that the signal strength be high in the position of the power reception device 2A and that the signal strengths be low in the directions toward the positions of the power reception devices 2B and 2C.

However, environmental and other factors between the power transmission device 1 and the power reception devices 2 make it difficult to realize the desired distribution ratio. Accordingly, to realize the desired distribution ratio, the power transmission device 1 changes the shape of the beam by adjusting the amplitude and the phase of each of the signals transmitted from antennas included in the power transmission device 1.

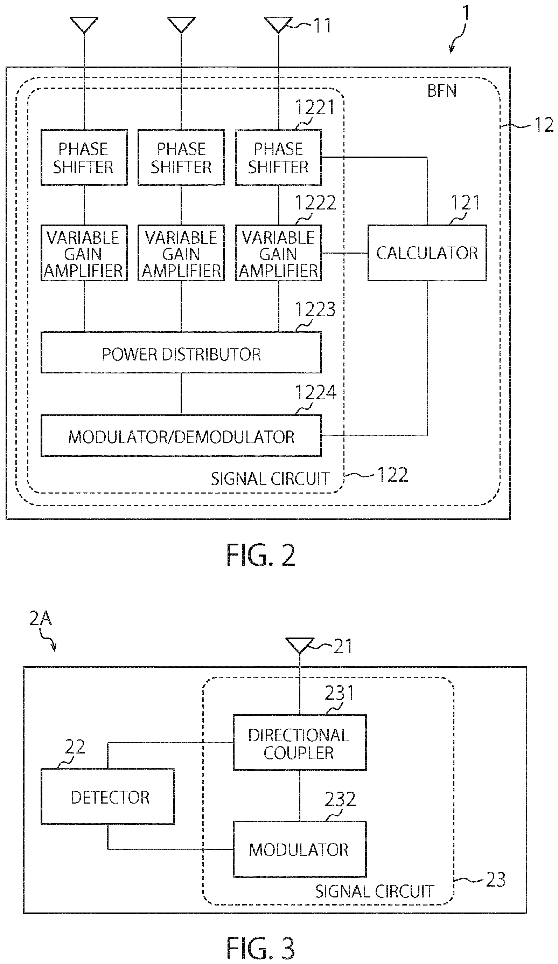

FIG. 2 is a block diagram illustrating an example of a schematic configuration of the wireless power transmission device 1 according to an arrangement of the present invention. The power transmission device 1 includes a plurality of antennas (first antennas) 11 and a Beam Forming Network (BFN) 12.

The antennas 11 are arranged for transmitting the signals used for transmitting the electric power and addressed to the power reception devices 2, by using the radio waves. In the present example, these signals will be referred to as power transmission signals. Further, the antennas 11 are arranged for receiving signals transmitted from the power reception devices 2 each as a reply to the power transmission signal. In the present example, these signals will be referred to as reply signals. As the plurality of antennas 11, for example, an array antenna including a plurality of antenna elements may be used.

The BFN 12 is circuit used for performing the beam forming process. The BFN 12 is arranged for determining a specification of the power transmission signal for each of the antennas 11. Further, the BFN 12 is arranged for transmitting the power transmission signals via the antennas 11. The beam is formed because the phases of the power transmission signals are different from one another.

The BFN 12 includes a calculator 121 and a signal circuit (a first signal circuit) 122. The calculator 121 is arranged for calculating an amplitude and a phase at the time of the transmission of the power transmission signal corresponding to each of the plurality of antennas 11, so that the ratio among the levels of the electric power obtained by the plurality of power reception devices 2 satisfies the desired distribution ratio.

To realize the desired distribution ratio, the calculator 121 performs a calculation by using an amplitude and a phase, at the time of the reception by each of the power reception devices 2, of the power transmission signal. The amplitude and the phase, at the time of the reception by each of the power reception devices 2, of the power transmission signal are transmitted from the power reception device 2. In other words, each of the power reception devices 2 feeds back information related to the power transmission signal to the power transmission device 1. Details of the process performed by each of the power reception devices 2 will be explained later. More specifically, the calculator 121 calculates the amplitude and the phase at the time of the transmission of the power transmission signal, based on the amplitude and the phase at the time of the reception of the power transmission signal and the power distribution ratio.

Further, an arrangement is acceptable in which each of the power reception devices 2 repeatedly feeds back the information, so that the calculator 121 performs the calculation every time the information is fed back. With this arrangement, the values of the amplitude and the phase change to new values, and also, the beam ratio of the beam formed by the power transmission device 1 changes. Details of the calculation performed by the calculator 121 will be explained later.

The signal circuit 122 included in the power transmission device 1 corresponds to the part of the BFN 12 other than the calculator 121. The signal circuit 122 included in the power transmission device 1 is arranged for generating the power transmission signals based on the amplitudes and the phases calculated by the calculator 121 and to transmit the generated power transmission signals via the antennas 11. Further, the signal circuit 122 included in the power transmission device 1 is arranged for obtaining the amplitude and the phase at the time of the reception of each of the power transmission signals out of a corresponding one of the reply signals.

The signal circuit 122 may be configured, as illustrated in FIG. 2 for example, to include phase shifters 1221 each corresponding to a different one of the antennas 11; variable gain amplifiers 1222 each corresponding to a different one of the antennas 11; a power distributor 1223; and a modulator/demodulator 1224. By using this configuration, it is possible to transmit each of the power transmission signals based on the amplitudes and the phases calculated by the calculator 121 through a different one of the antennas 11. The above configuration of the signal circuit 122 is merely an example, and possible configurations thereof are not limited to this example.

Each of the phase shifters 1221 is arranged for changing the phase of a corresponding one of the power transmission signals into the phase calculated by the calculator 121. Each of the variable gain amplifiers 1222 is arranged for changing the amplitude of a corresponding one of the power transmission signals into the amplitude calculated by the calculator 121. The power distributor 1223 is arranged for distributing the power transmission signals among the antennas 11. The modulator/demodulator 1224 is arranged for generating the power transmission signals by using a predetermined modulation method. Further, the modulator/demodulator 1224 is arranged for demodulating the reply signals by using a predetermined demodulation method. As a result, it is possible to obtain the amplitude and the phase at the time of the reception of the power transmission signal that are contained in each of the reply signals.

FIG. 3 is a block diagram illustrating an example of a schematic configuration of any of the wireless power reception devices 2 according to an arrangement of the present invention. The power reception device 2 includes at least one antenna (a second antenna) 21, a detector 22, and a signal circuit (a second signal circuit) 23.

The antenna 21 included in the power reception device 2 is arranged for receiving a corresponding one of the power transmission signals and to transmit the reply signal, by using radio waves. The quantity of the antennas 21 included in each of the power reception devices 2 may be one or more. As illustrated in FIG. 1, the quantity of the antennas 21 may vary among the power reception devices 2.

The detector 22 is arranged for detecting the amplitude and the phase of the received power transmission signal. In other words, the detector 22 is arranged for finding out the amplitude and the phase at the time of the reception of the power transmission signal.

Based on the amplitude and the phase at the time of the reception of the power transmission signal extracted by the detector 22, the signal circuit 23 included in the power reception device 2 is arranged for generating the reply signal and to transmit the reply signal via the antenna 21. It is sufficient when the amplitude and the phase at the time of the reception of the power transmission signal are used for the generation of the reply signal. For example, the reply signal may be modulated by using a phase difference between the phase at the time of the reception of the power transmission signal and the phase at the time of the transmission of the power transmission signal. In this situation also, the reply signal is considered as being generated based on the phase at the time of the reception of the power transmission signal.

The signal circuit 23 included in the power reception device 2 may be configured, as illustrated in FIG. 3 for example, to include a directional coupler 231 and a modulator 232. By using this configuration, it is possible to transmit a power transmission signal based on the amplitude and the phase calculated by the calculator 121. The configuration of the signal circuit 23 is merely an example, and possible configurations thereof are not limited to this example. Further, a power reception circuit that receives the electric power, a power source circuit that utilizes the received electric power, and the like may be included in the signal circuit 23 or may be provided as separate constituent elements. Explanations thereof will be omitted.

The directional coupler 231 is arranged for separating the power transmission signal from a signal received by the antenna 21 included in the power reception device 2 and to send the power transmission signal to the detector 22. As a result, the detector 22 is exempted from having to detect any signal other than the power transmission signal.

The modulator 232 is arranged for generating the reply signal by modulating a signal based on the amplitude and the phase at the time of the reception of the power transmission signal detected by the detector 22. For example, a method used for the modulation may be determined in advance so as to enable the signal circuit 122 included in the power transmission device 1 to recognize the modulation method. With this arrangement, the signal circuit 122 included in the power transmission device 1 is able to calculate the amplitude and the phase at the time of the reception of the power transmission signal, based on the modulation method used for the reply signal.

Further, the reply signal is transmitted to the power transmission device 1 via the antenna 21. The power transmission device 1 receives the reply signal from the power reception device 2 and recognizes the amplitude and the phase at the time of the reception of the power transmission signal based on the modulation method or the like. As a result, the calculator 121 included in the power transmission device 1 is able to perform the calculation based on the amplitude and the phase at the time of the reception of the power transmission signal.

Next, the calculation performed by the calculator 121 will be explained. A vector related to the power transmission signal transmitted by the power transmission device 1 will be referred to as a transmission signal vector "a". Further, among the antennas 11 being used of which the quantity is equal to n (where n is a positive integer of 1 or larger), the amplitude at the time of the transmission of the power transmission signal for a k-th antenna 11 (where k is an integer satisfying $1 \leq k \leq n$) will be referred to as $A_k$, whereas the phase at the time of the transmission for the k-th antenna 11 will be referred to as $\phi s_k$. In this situation, the transmission signal vector "a" is a vector having elements presented below.

[Expression 1]

$$a = \left[ A_1 e^{j\phi s_1}, A_2 e^{j\phi s_2}, \cdots, A_n e^{j\phi s_n} \right]^T$$

In Expression 1, the letter T denotes either a matrix or a transposition of the vector. In other words, the vector a is a column vector.

Further, a vector related to the power transmission signal received by any of the power reception devices 2 will be referred to as a reception signal vector "b". Among the power reception devices 2 of which the quantity is n, the power distribution ratio for a k-th power reception device 2 will be expressed as $P_k$. For example, when it is assumed that the distribution ratio among the power reception devices 2A, 2B, and 2C illustrated in FIG. 1 is 7:2:1, as mentioned above, the distribution ratio $P_1$ of the power reception device 2A is 7, the distribution ratio $P_2$ of the power reception device 2B is 2, and the distribution ratio $P_3$ for the power reception device 2C is 1. Further, the phase at the time of the reception of the power transmission signal received by the k-th power reception device 2 will be expressed as $\phi r_k$. When the reception signal vector "b" is expressed as presented in the formula below, it means that the plurality of power reception devices 2 are receiving electric power according to the desired distribution ratio.

[Expression 2]

$$b = \left[ \sqrt{P_1} e^{j\phi r_1}, \sqrt{P_2} e^{j\phi r_2}, \cdots, \sqrt{P_n} e^{j\phi r_n} \right]^T$$

Accordingly, it is sufficient when the calculator 121 calculates the transmission signal vector "a" in such a manner that the amplitude and the phase at the time of the reception of the power transmission signal obtained from each of the power reception devices 2 are equal to the amplitude and the phase of the reception signal vector "b" in the above formula.

When a coefficient related to a propagation channel between the power transmission device 1 and any of the power reception devices 2 is referred to as a propagation channel matrix H, b=Ha is satisfied. Accordingly, the calculator 121 may predict the propagation channel H based on the amplitude and the phase at the time of the reception of the power transmission signal and calculate the transmission signal vector "a". The method for predicting the propagation channel H is not particularly limited. It is acceptable to use a publicly-known method such as a Multiple-Input and Multiple-Output (MIMO) method utilizing a codebook. Further, the propagation channel H may also be predicted every time the feedback is received from each of the power reception devices 2.

Further, the method for calculating the new amplitude and the new phase implemented by the calculator 121 is not limited to the example described above. It is also acceptable to vary the transmission signal vector "a" in a trial-and-error manner. In that situation, based on the feedback from the power reception device 2, a change caused in the reception signal vector "b" by a change made in the transmission signal vector "a" is recognized, so that an amount of change made in the vector "a" is accordingly varied. In this manner, the reception signal vector "b" is gradually brought closer to a desired value.

Further, by deforming the formula b=Ha while using characteristics of a pseudo inverse matrix, it is possible to express the electric power at the time of the transmission (the transmission power) of the power transmission signal, as a function f($\phi$s) based on the phase $\phi$s, by using the formula presented below.

[Expression 3]

$$f(\phi s) = |a|^2 = b^H (H^+)^H H^+ b$$

In Expression 3, $H^+$ denotes a pseudo inverse matrix of the propagation channel matrix H, whereas the superscript H in the upper right position denotes a complex conjugate transpose. Because the pseudo inverse matrix is used, it is possible to apply the above formula regardless of the quantity of the antennas 11 provided for the power transmission device 1 and the quantity of the antennas 21 provided for the power reception device 2. By using the above formula, it is possible to simplify the problem of finding how to efficiently supply the electric power while keeping low the transmission power of the power transmission signal, as an optimization problem of the phase $\phi$s at the time of the transmission, which is not dependent on the power distribution ratio $P_k$. Consequently, even when there is a condition where the desired distribution ratio should be satisfied, it is possible to enhance the efficiency of the wireless power supply system, by adjusting the value of $\phi$s so as to decrease the value of f($\phi$s).

For this reason, the calculator 121 may adjust the phase $\phi$s in such a manner that the efficiency of the system is enhanced. For example, whether to increase or decrease the new phase value may be determined based on whether the previously-calculated phase value increases or decreases and whether the transmission power level increases or decreases. In other word, an increase/decrease direction of the new phase value may be determined based on an increase/decrease direction of the previously-calculated phase value and an increase/decrease direction of the transmission power level. When it is observed that decreasing the phase value results in a decrease in the transmission power level, a new phase is calculated by further decreasing the value. On the contrary, when it is observed that decreasing the phase value results in an increase in the transmission power level, a new phase is calculated by increasing the value. It is acceptable to converge the value of the phase $\phi$s in this manner, by increasing or decreasing the value of the phase $\phi$s so as to enhance the efficiency of the system. Examples of such a method include a steepest gradient method.

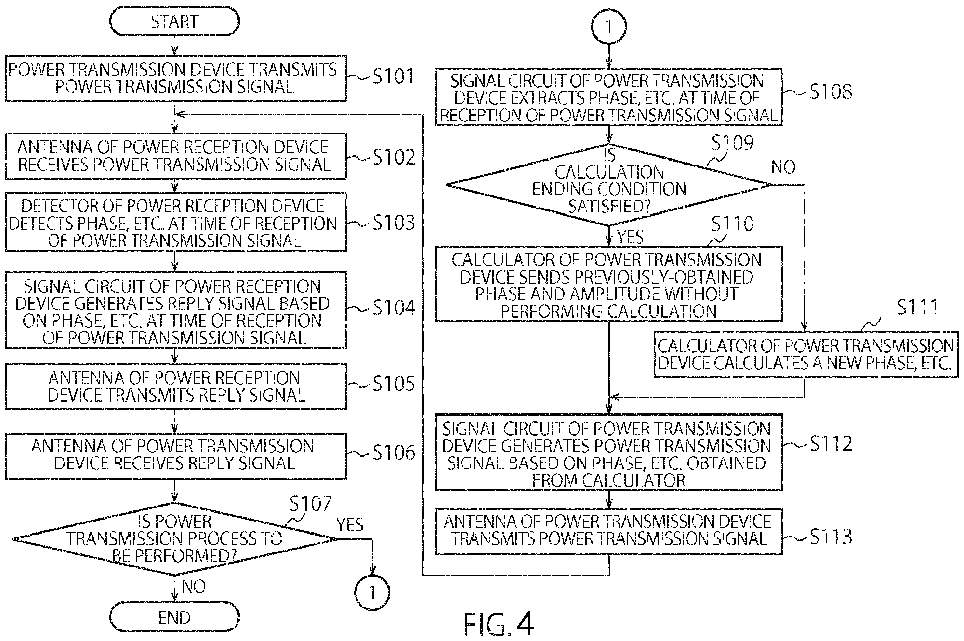

FIG. 4 is a drawing illustrating an example of a schematic flowchart of an overall process performed by a wireless power supply system according to an arrangement of the present invention. The flowchart in the drawing is merely an example. The processing procedure is sufficient as long as it is possible to obtain, in advance, a processing result required by a following process. Accordingly, the processing procedure may include any other processes, for example.

The power transmission device 1 transmits a power transmission signal (S101). When the power transmission signal is transmitted for the first time, the calculator 121 may perform a calculation without using the amplitude and the phase at the time of reception of the power transmission signal. Alternatively, the amplitude and the phase at the time of the transmission of the power transmission signal may be used as initial values. The initial values may arbitrarily be determined in advance. The antenna 21 of a power reception device 2 receives the power transmission signal (S102). The detector 22 of the power reception device 2 detects the amplitude and the phase at the time of the reception of the power transmission signal (S103). The detected amplitude and phase are sent to the signal circuit 23 included in the power reception device 2. The signal circuit 23 included in the power reception device 2 generates a reply signal based on the amplitude and the phase at the time of the reception of the power transmission signal (S104). After that, the antenna 21 of the power reception device 2 transmits the generated reply signal (S105).

The antenna 11 of the power transmission device 1 receives the transmitted reply signal (S106). When the power transmission device 1 is to perform no power transmission process for the reason that, for example, the power transmission has finished because a certain period of time has already elapsed (S107: No), the flow ends. On the contrary, when the power transmission device 1 is to perform a power transmission process (S107: Yes), the signal circuit 122 included in the power transmission device 1 extracts the amplitude and the phase at the time of the reception of the power transmission signal, from the reply signal (S108).

The calculator 121 included in the power transmission device 1 checks to see whether or not a calculation ending condition is satisfied (S109). The calculation ending condition may be based on, for example, whether or not the number of times the calculation has been performed exceeds a threshold value. For example, when the propagation channel matrix H is simply predicted, the number of times of the calculation may be set to one. Alternatively, when the value of the phase $\phi$s needs to be converged to an optimal value for the purpose of enhancing the efficiency of the system, the number of times of the calculation may be set to two or more, while using, as the calculation ending condition, whether or not the amount of change in the transmission power level is equal to or smaller than a threshold value.

When the calculation ending condition is satisfied (S105: Yes), the calculator 121 included in the power transmission device 1 sends the previously-obtained amplitude and phase to the signal circuit 122 included in the power transmission device 1, without performing any calculation (S110). In this situation, the signal circuit 122 included in the power transmission device 1 may be informed that neither a new amplitude nor a new phase will be calculated. On the contrary, when the calculation ending condition is not satisfied (S109: No), the power transmission device 1 performs a calculation to calculate a new amplitude and a new phase (S111). Further, the signal circuit 122 included in the power transmission device 1 generates a power transmission signal based on the amplitude and the phase obtained from the calculator 121 (S112). The antenna 11 of the power transmission device 1 transmits the power transmission signal (S113). After that, the processing flow returns to the process at S102, where the power reception device 2 performs the process again. The explanation of the flow in the entire process performed by the wireless power supply system is thus completed.

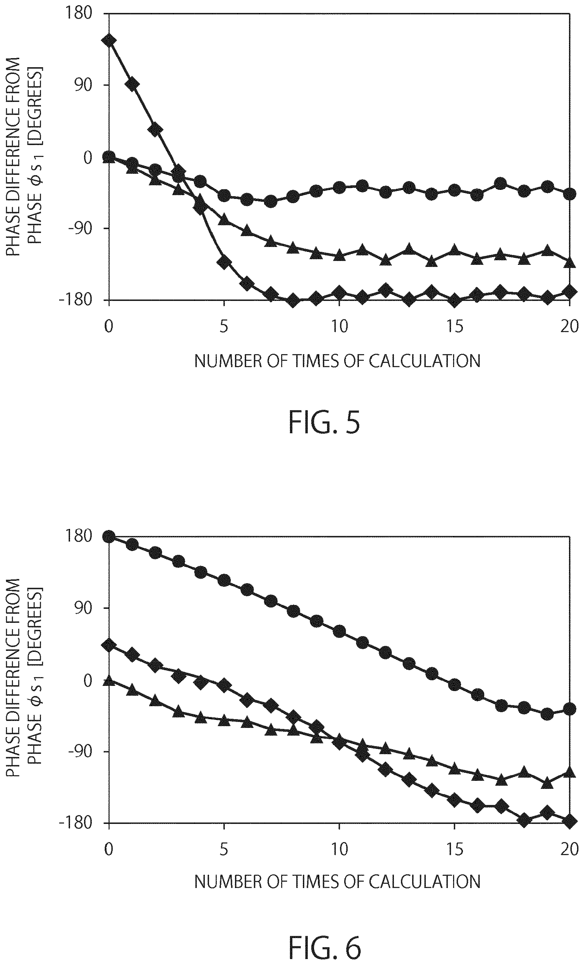

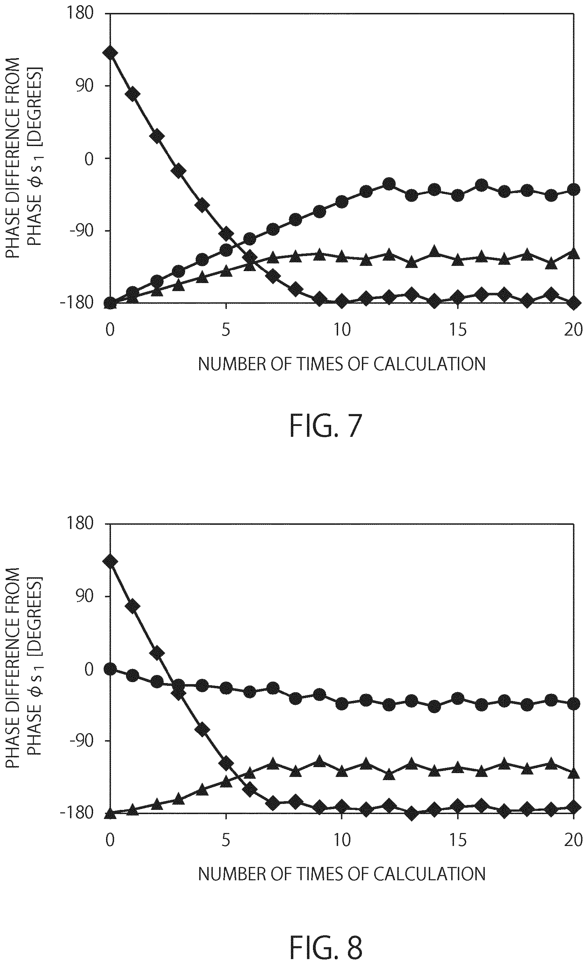

FIGS. 5 to 8 are first to fourth charts illustrating transitions in calculated values when the phase $\phi s$ is adjusted by using a steepest gradient method. FIGS. 5 to 8 illustrate results of an experiment conducted while varying an initial value of phases $\phi s_1$, $\phi s_2$, and $\phi s_3$, by using a wireless power supply system in the same environment where the system is structured with a single power transmission device 1 and three power reception devices 2.

The line based on a plotline drawn with diamonds ($\blacklozenge$) indicates a transition of the phase $\phi s_1$. The line based on a plotline drawn with dots ($\bullet$) indicates a transition of a phase difference expressed as "$\phi s_2 - \phi s_1$". The line based on a plotline drawn with triangles ($\blacktriangle$) indicates a transition of a phase difference expressed as "$\phi s_3 - \phi s_1$". The horizontal axis expresses the number of times the calculation was performed. The vertical axis expresses an angle. Because the wireless power supply system was placed in the same environment, the optimal phase in the present experiment was constant. Accordingly, before the experiment was conducted, the optimal phase was calculated in advance, by using a non-linear generalized reduced gradient method. The most efficient angles were approximately -180 degrees for the phase $\phi s_1$, approximately -100 degrees for the phase difference "$\phi s_2 - \phi s_1$", and approximately -45 degrees for the phase difference "$\phi s_3 - \phi s_1$".

As observed in FIGS. 5 to 8, even when the initial values were different, all the calculation results substantially converged to a phase considered to be optimal. By repeatedly calculating the phase in this manner, it is possible to enhance the efficiency of the system by causing the phase to converge to the optimal phase.

As explained above, according to the present arrangement, it is possible to realize the predetermined power distribution ratio, even when the electric power is transmitted to the plurality of power reception devices 2 at once. Further, according to the present arrangement, while keeping the level of the transmission power low is regarded as the optimization problem using the phase $\phi s$, the new phase $\phi s$ is calculated so as to decrease the power transmission level. By using this configuration, it is possible to realize an enhancement in the efficiency of the wireless power supply system.

Each process in the arrangements described above can be implemented by software (program). Thus, the arrangements described above can be implemented using, for example, a general-purpose computer apparatus as basic hardware and causing a processor mounted in the computer apparatus to execute the program.

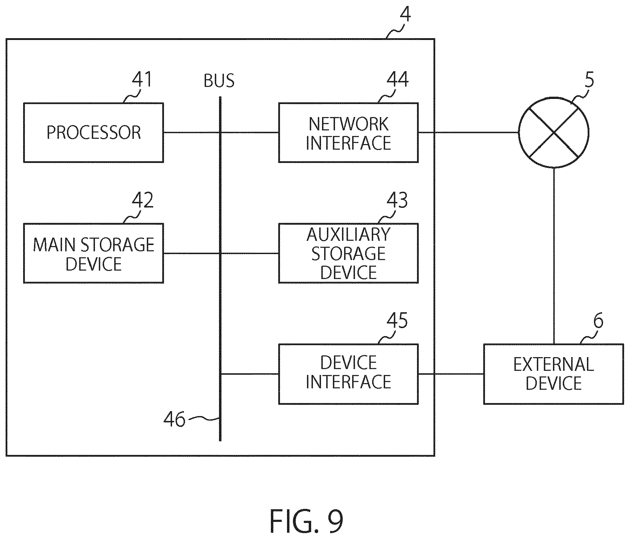

FIG. 9 is a block diagram illustrating an example of a schematic configuration of a computer apparatus according to an arrangement of the present invention. It is possible to realize the power transmission device 1 and the power reception devices 2 as a computer apparatus 4 including a processor 41, a main storage device 42, an auxiliary storage device 43, a network interface 44, and a device interface 45 that are connected together via a bus 46.

Although the computer apparatus 4 illustrated in FIG. 9 includes one each of the constituent elements, the computer apparatus 4 may include two or more of any of the constituent elements.

It is also acceptable to realize the power transmission device 1 and the power reception devices 2 according to the present arrangement, by installing, in advance, programs executed by these devices into the computer apparatus 4. Alternatively, it is also acceptable to realize the power transmission device 1 and the power reception devices 2 by installing the programs into the computer apparatus 4, as appropriate, by having the programs stored in a storage medium such as a CD-ROM or by having the programs distributed via a network.

The processor 41 is an electronic circuit including a control device and an arithmetic device of a computer. The processor 41 is arranged for performing arithmetic processing based on data and programs input thereto from the devices structuring an internal configuration of the computer apparatus 4 and to output arithmetic processing results and control signals to devices or the like. More specifically, the processor 41 executes an Operating System (OS) of the computer apparatus 4, application programs, and the like, so as to control the devices structuring the computer apparatus 4.

The main storage device 42 is a storage device arranged for storing therein instructions executed by the processor 41, various types of data, and the like. The information stored in the main storage device 42 is directly read by the processor 41. The auxiliary storage device 43 is a storage device besides the main storage device 42. Each of the storage devices denotes an arbitrary electronic component part capable of storing therein electronic information. As the main storage device 42, a volatile memory used for temporarily saving information, such as a RAM, a DRAM, or an SRAM, may primarily be used. However, in arrangements of the present invention, the main storage device 42 does not necessarily have to be such a volatile memory. The storage devices used as the main storage device 42 and the auxiliary storage device 43 may each be configured by using a volatile memory or a non-volatile memory.

When the processor 41 is arranged for directly or indirectly reading information from and/or writing information to the main storage device 42 or the auxiliary storage device 43, the storage device is considered as being arranged for electrically communicating with the processor. Alternatively, the main storage device 42 may be incorporated into the processor. In that situation also, the main storage device 42 is considered as being arranged for electrically communicating with the processor.

The network interface 44 is an interface arranged for establishing a connection to a communication network in a wireless or wired manner. The network interface 44 may be configured with any interface compliant with an existing communication standard. Through the network interface 44, processing results or the like may be transmitted to an external device 6 that is connected and communicates via the communication network 5. The external device 6 may be an external storage medium, a display device, or storage such as a database.

The device interface 45 is an interface configured with a USB or the like that is connected to an external storage medium recording therein processing results or the like. The external storage medium may be an arbitrary recording medium such as an HDD, a CD-R, a CD-RW, a DVD-RAM, a DVD-R, a Storage Area Network (SAN), or the like. The external storage medium may be connected to storage or the like, via the device interface 45.

While certain arrangements have been described, these arrangements have been presented by way of example only, and are not intended to limit the scope of the claims. Indeed, the device and the system described herein may be embodied in a variety of other forms; furthermore, various omissions, substitutions and changes in the form of the arrangements described herein may be made without departing from the spirit of the inventions. The accompanying claims and their equivalents are intended to cover such forms or modifications as would fall within the scope and spirit of the inventions.

The present disclosure extends to the following series of lettered clauses:

1. A wireless power transmission device that transmits electric power to a plurality of wireless power reception devices by using radio waves, the wireless power transmission device comprising:

a plurality of antennas (11);
a calculator (121) arranged for calculating an amplitude and a phase at a time of transmission of a power transmission signal corresponding to each of the plurality of antennas; and
a signal circuit (122) arranged for transmitting the power transmission signals via the plurality of antennas, based on the amplitudes and the phases calculated by the calculator, wherein
the calculator calculates the amplitude and the phase at the time of the transmission of the power transmission signal, based on an amplitude and a phase at a time of reception by the wireless power reception devices of the power transmission signal and a power distribution ratio corresponding to the wireless power reception device.

2. The wireless power transmission device according to clause 1, wherein
the calculator determines an increase/decrease direction of a new phase value based on an increase/decrease direction of the previously-calculated phase value and an increase/decrease direction at the time of the transmission of the power transmission signal.

3. The wireless power transmission device according to clause 2, wherein
the calculator calculates the new phase value by using a steepest gradient method.

4. A wireless power supply system including a wireless power transmission device (1) that transmits electric power by using radio waves and a plurality of wireless power reception devices (2) that each receive the electric power from the wireless power transmission device by using the radio waves, wherein
the wireless power transmission device comprises:

a plurality of first antennas (11);
a calculator (121) arranged for calculating an amplitude and a phase at a time of transmission of a power transmission signal corresponding to each of the plurality of first antennas; and
a first signal circuit (122) arranged for transmitting the power transmission signals via the plurality of first antennas, based on the amplitudes and the phases calculated by the calculator, and

the wireless power reception devices comprise:

a second antenna (21);
a detector arranged for detecting an amplitude and a phase at a time of reception of a power transmission signal received by the second antenna; and
a second signal circuit (23) arranged for transmitting a reply signal based on the amplitude and the phase at the time of the reception of the power transmission signal received by the second antenna, and
the calculator included in the wireless power transmission device calculates the amplitude and the phase at the time of the transmission of the power transmission signal, based on the amplitude and the phase at the time of the reception of the power transmission signal which are obtained out of the reply signal and a power distribution ratio corresponding to the wireless power reception device.

**Claims**

1. A wireless power transmission device that transmits electric power to a plurality of wireless power reception devices by using radio waves, the wireless power transmission device comprising:

   a plurality of antennas (11);
   a calculator (121) arranged for calculating an amplitude and a phase at a time of transmission of a power transmission signal corresponding to each of the plurality of antennas; and
   a signal circuit (122) arranged for transmitting the power transmission signals via the plurality of antennas, based on the amplitudes and the phases calculated by the calculator, wherein
   the calculator calculates the amplitude and the phase at the time of the transmission of the power transmission signal, based on an amplitude and a phase at a time of reception by the wireless power reception devices of the power transmission signal and a power distribution ratio corresponding to the wireless power reception device.

2. The wireless power transmission device according to claim 1, wherein
   the calculator determines an increase/decrease direction of a new phase value based on an increase/decrease direction of the previously-calculated phase value and an increase/decrease direction at the time of the transmission of the power transmission signal.

3. The wireless power transmission device according to claim 2, wherein
   the calculator calculates the new phase value by using a steepest gradient method.

4. A wireless power supply system including a wireless power transmission device (1) that transmits electric power by using radio waves and a plurality of wireless power reception devices (2) that each receive the electric power from the wireless power transmission device by using the radio waves, wherein
   the wireless power transmission device comprises:

   a plurality of first antennas (11);
   a calculator (121) arranged for calculating an amplitude and a phase at a time of transmission of a power transmission signal corresponding to each of the plurality of first antennas; and
   a first signal circuit (122) arranged for transmitting the power transmission signals via the plurality of first antennas, based on the amplitudes and the phases calculated by the calculator, and

   the wireless power reception devices comprise:

   a second antenna (21);
   a detector arranged for detecting an amplitude and a phase at a time of reception of a power transmission signal received by the second antenna; and
   a second signal circuit (23) arranged for transmitting a reply signal based on the amplitude and the phase at the time of the reception of the power transmission signal received by the second antenna, and

   the calculator included in the wireless power transmission device calculates the amplitude and the phase at the time of the transmission of the power transmission signal, based on the amplitude and the phase at the time of the reception of the power transmission signal which are obtained out of the reply signal and a power distribution ratio corresponding to the wireless power reception device.

FIG. 1

FIG. 2

FIG. 3

START

POWER TRANSMISSION DEVICE TRANSMITS POWER TRANSMISSION SIGNAL — S101

ANTENNA OF POWER RECEPTION DEVICE RECEIVES POWER TRANSMISSION SIGNAL — S102

DETECTOR OF POWER RECEPTION DEVICE DETECTS PHASE, ETC. AT TIME OF RECEPTION OF POWER TRANSMISSION SIGNAL — S103

SIGNAL CIRCUIT OF POWER RECEPTION DEVICE GENERATES REPLY SIGNAL BASED ON PHASE, ETC. AT TIME OF RECEPTION OF POWER TRANSMISSION SIGNAL — S104

ANTENNA OF POWER RECEPTION DEVICE TRANSMITS REPLY SIGNAL — S105

ANTENNA OF POWER TRANSMISSION DEVICE RECEIVES REPLY SIGNAL — S106

IS POWER TRANSMISSION PROCESS TO BE PERFORMED? — S107
YES → (1)
NO

END

(1)

SIGNAL CIRCUIT OF POWER TRANSMISSION DEVICE EXTRACTS PHASE, ETC. AT TIME OF RECEPTION OF POWER TRANSMISSION SIGNAL — S108

IS CALCULATION ENDING CONDITION SATISFIED? — S109
NO →
YES

CALCULATOR OF POWER TRANSMISSION DEVICE SENDS PREVIOUSLY-OBTAINED PHASE AND AMPLITUDE WITHOUT PERFORMING CALCULATION — S110

CALCULATOR OF POWER TRANSMISSION DEVICE CALCULATES A NEW PHASE, ETC. — S111

SIGNAL CIRCUIT OF POWER TRANSMISSION DEVICE GENERATES POWER TRANSMISSION SIGNAL BASED ON PHASE, ETC. OBTAINED FROM CALCULATOR — S112

ANTENNA OF POWER TRANSMISSION DEVICE TRANSMITS POWER TRANSMISSION SIGNAL — S113

FIG.4

FIG. 5

FIG. 6

FIG. 7

FIG. 8

FIG. 9

Europäisches
Patentamt
European
Patent Office
Office européen
des brevets

## EUROPEAN SEARCH REPORT

**Application Number**

EP 17 18 8536

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/091706 A1 (CHEMISHKIAN SERGEY [US] ET AL) 2 April 2015 (2015-04-02) * paragraph [0035] - paragraph [0056]; figures 1-9 * | 1-4 | INV. H02J50/40 H02J50/23 |
| X | US 2016/099601 A1 (LEABMAN MICHAEL A [US] ET AL) 7 April 2016 (2016-04-07) * paragraph [0086] - paragraph [0093]; figures 2,3 * | 1-4 | |
| X | US 2016/087483 A1 (HIETALA ALEXANDER WAYNE [US] ET AL) 24 March 2016 (2016-03-24) * paragraph [0030] - paragraph [0032]; figure 2 * | 1-4 | |

**TECHNICAL FIELDS SEARCHED (IPC)**

H02J

The present search report has been drawn up for all claims

| Place of search | Date of completion of the search | Examiner |
|---|---|---|
| Munich | 15 February 2018 | Telega, Pawel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 8536

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2018

| Patent document cited in search report | | Publication date | Patent family member(s) | Publication date |
|---|---|---|---|---|
| US 2015091706 | A1 | 02-04-2015 | NONE | |
| US 2016099601 | A1 | 07-04-2016 | NONE | |
| US 2016087483 | A1 | 24-03-2016 | NONE | |

EPO FORM P0459

For more details about this annex : see Official Journal of the European Patent Office, No. 12/82